# EUROPÄISCHE PATENTSCHRIFT

(11) **EP 1 019 871 B1**
(45) Veröffentlichungstag und Bekanntmachung des Hinweises auf die Patenterteilung: **28.08.2002**
(21) Anmeldenummer: 98958186.3
(22) Anmeldetag: 24.09.1998
(51) Int. Cl.: G06T 7/20

(54) **VERFAHREN ZUR BESTIMMUNG VON BLOCKVEKTOREN FÜR DIE BEWEGUNGSSCHÄTZUNG**
METHOD FOR DETERMINING BLOCK VECTORS FOR ESTIMATING MOTION
PROCEDE DE DETERMINATION DE VECTEURS BLOCS DESTINE A L'EVALUAT ION DE MOUVEMENTS

(30) Priorität: 29.09.1997 DE 19744134
(43) Veröffentlichungstag der Anmeldung: 19.07.2000
(73) Patentinhaber: Heinrich-Hertz-Institut für Nachrichtentechnik Berlin GmbH, 10587 Berlin (DE)
(72) Erfinder: OHM, Jens, D-12205 Berlin (DE); BRAUN, Matthias, D-13583 Berlin (DE); RÜMMLER, Kathrin, D-12487 Berlin (DE); HAHN, Martin, D-14197 Berlin (DE); HORN, Raymond, D-10119 Berlin (DE); TALMI, Maati, D-10787 Berlin (DE)
(74) Vertreter: Rudolph, Margit
(86) Internationale Anmeldenummer: DE9802935
(87) Internationale Veröffentlichungsnummer: WO99017256

(56) Entgegenhaltungen:
- EP-A- 0 643 539
- US-A- 4 937 666
- HAAN DE G ET AL: "TRUE-MOTION ESTIMATION WITH 3-D RECURSIVE SEARCH BLOCK MATCHING" IEEE TRANSACTIONS ON CIRCUITS AND SYSTEMS FOR VIDEO TECHNOLOGY, Bd. 3, Nr. 5, 1. Oktober 1993, Seiten 368-379, XP000414663 in der Anmeldung erwähnt

## Beschreibung

### Technisches Gebiet

Die Erfindung liegt auf dem Gebiet der digitalen Videosignalverarbeitung und bezieht sich auf ein Verfahren zur Bestimmung von Blockvektoren für die Bewegungsschätzung in Videobildsequenzen, bei dem Vektorkandidaten verwendet und zwischengespeicherte Daten des aktuellen Zeitintervalls und mindestens des vorausgegangenen Zeitintervalls in Blöcken zu je M x N Pixeln organisiert abgearbeitet werden.

### Stand der Technik

Die Verarbeitung digitaler Videosignale bezweckt, mit geringer erforderlicher Übertragungsbandbreite bzw. Speicherkapazität auszukommen und umfaßt im wesentlichen die Abtastung des darzustellenden Objektraumes z.B. mittels einer Kamera, die Quantisierung der Kamerasignale und eine Kompression der Daten und deren Kodierung auf der Aufnahmeseite, sodann die Speicherung und/oder Übertragung dieser Daten und schließlich zur Wiedergabe der auf einem flächigen Schirm darzustellenden Bilder die Durchführung der aufnahmeseitig angewendeten Maßnahmen in umgekehrter Reihenfolge und Richtung. Dabei sollen alle zur Anwendung gelangenden Maßnahmen und Mittel die Effizienz steigern, ohne relevanten Qualitätsverlust hinnehmen zu müssen.

Liegen Videosignale in einer zur Datenkompression geeigneten Form vor, können damit auch weitere Verarbeitungen für spezielle Zwecke, z.B. für eine Bewegungsschätzung durchgeführt werden. Die Bewegungsschätzung wird hauptsächlich zur Formatkonversion zwischen unterschiedlichen Fernsehsytemen und zur Erhöhung der Datenkompression benötigt.

Die Kenntnis über örtliche und zeitliche Änderungen in der aufgenommenen Szene, die von Bewegungen einzelner aufgenommenen Objekte und/oder Kamerabewegungen hervorgerufen werden, wird bei der Datenkompression dazu ausgenutzt, diejenigen Bildanteile, die sich in einer Sequenz nicht ändern, von einer mehrfachen Übertragung oder Speicherung auszunehmen. Bei einer Formatkonversion werden Zwischenbilder oder Zwischenzeilen erzeugt bzw. eliminiert, wobei die wahre Bewegung in der aufgenommenen Szene zu berücksichtigen ist.

Es sind mehrere Methoden zur Bewegungsschätzung entwickelt worden. Diese lassen sich grob in Gradienten- und in Vergleichs- bzw. Zuordnungsverfahren untergliedern. Als Gradientenverfahren sind beispielsweise die Pixelrekursion und die Methode des optischen Flusses sowie - unter bestimmten Voraussetzungen - der Blockvergleich (Block-Matching) anzusehen. Alle diese Methoden zielen darauf ab, mit möglichst geringem Aufwand möglichst hohe Genauigkeit zu erreichen.

Nach dem Prinzip des optischen Flusses läßt sich für dichte Bewegungsvektorfelder eine Abhängigkeitsfunktion angeben, in der für die zu schätzenden Bewegungskomponenten die beiden örtlichen Ableitungen-horizontaler und vertikaler Gradient - und die zeitliche Ableitung-Bildpunktdifferenz - auf einer gegebenen Bildpunktposition benötigt werden.

Bei der Pixelrekursion wird für jeden Bildpunkt (Pixel) der Bewegungsvektor aus bereits verfügbaren Vektoren benachbarter Bildpunkte durch Hinzufügen eines Aktualisierungsvektors (Update-Vektor) ermittelt. Infolge der starken Abhängigkeit örtlich benachbarter Positionen ist die erzielbare Genauigkeit, jedoch auch der erforderliche Aufwand hoch. Die Bewegungsschätzung wird aus den Steigungen der horizontalen und vertikalen Helligkeitsverläufe innerhalb des aktuell vorliegenden Bildes sowie der verschobenen Bildpunktdifferenz bezüglich eines Referenzbildes - z.B. des unmittelbaren zeitlichen Vorgängers - berechnet.

Die Block-Matching-Methode ermöglicht eine sehr robuste Bewegungsschätzung. In nicht dichten Bewegungsvektorfeldern wird ein Mustervergleich für jeden Block mit bereits abgearbeiteten Blöcken durchgeführt. Als Referenzen dienen örtlich mehr oder weniger eng benachbarte Blöcke und/oder zeitliche Vorgänger an der selben Blockposition. Um Bewegungen großer örtlicher Ausdehnung erfassen zu können, ist eine Vielzahl von Blöcken zu vergleichen, der Aufwand also immens. Dieser läßt sich durch rekursives Blockmatching verringern, indem Vektoren, die bereits für Vergleichsblöcke ermittelt worden sind, als Ausgangswerte für die an der aktuellen Position durchzuführenden Schätzung benutzt werden. Sprunghafte Bewegungsänderungen, die häufig an Objektgrenzen in Erscheinung treten, lassen sich mit vertretbarem Aufwand auch auf diese Weise nicht erfassen.

Der Stand der Technik, von dem die Erfindung ausgeht, ist aus den nachfolgend angegebenen und gewürdigten Veröffentlichungen bekannt. Diese Veröffentlichungen stehen im Hinblick auf ausdrückliche Bezugnahmen miteinander in untrennbarem Zusammenhang. Es handelt sich um:
- "True Motion Estimation with 3-D Recursive Search Block-Matching", G. de Haan et al in : "IEEE Transactions on Circuits and Systems for the Video Technology", Bd. 3 Nr. 5, Okt. 1993, Seiten 368 bis 379;
- EP-A1-0 474 276;
- EP-A1-0 415 491;
- US-A-4 853 775.

Der historischen Entwicklung entsprechend ist zunächst der US-A-4 853 775 folgendes zu entnehmen: Auf der von A.N. Netravali und J.D. Robbins im Jahre 1979 veröffentlichten Methode beruhend, das Minimum der mittleren quadratischen Abweichung lokaler Luminanzänderungen Pixel für Pixel von Vollbild zu Vollbild zu bestimmen, wird gemäß den fast ein Jahrzehnt später im hier behandelten US-Patent vorgeschlagenen Maßnahmen und Mitteln vorgesehen, in enger kausaler Nachbarschaft zum aktuellen Pixel vier Verschiebungswerte zu bestimmen, die als Kandidaten für Startvektoren benutzt werden.

Für die Bewegungsschätzung gemäß EP-A1-0415 491, die für einzelne Bildbereiche jeweils zwei Startvektoren als Kandidaten für die Bestimmung eines Bewegungsvektors vorsieht, werden als Komponenten für Startvektoren diejenigen Komponenten von bereits zuvor für andere Bildbereiche bestimmten Kandidaten verwendet, die denen des Startvektors entsprechen. Hierbei sollen Bildbereiche sowohl aus einem einzelnen Bildelement (Pixel), einer Gruppe, z.B. einem Block von Pixeln oder anderen, explizit genannten Organisationsformen von Pixeln bestehen können.

Die aus der EP-A-0 474 276 bekannten Einzelheiten zur Aktualisierung (Updating) von Prädiktionsvektoren setzen hingegen aus mehreren Pixeln bestehende Bildbereiche, z.B. Blöcke, voraus. Hiermit ist es möglich, Bewegungen aufgenommener Objekte mit periodischen Strukturen, z.B. von aus Gitterstäben bestehenden Torflügeln, in die Bewegungsschätzung einzubeziehen.

Schließlich vermittelt die weiter oben an erster Stelle aufgeführte Veröffentlichung in "IEEE Transactions on Circuits and Systems for Video Technology" im Rahmen der dort vorgestellten Methode für rekursives Block-Matching zur Bewegungsschätzung unter Verwendung von acht Kandidaten pro Block auch überblickartige Erläuterungen zu bekannten speziellen Maßnahmen und deren Stärken und Schwächen. Ziele der dort vorgestellten Methode bestehen darin, schnelle Konvergenz und hohe Genauigkeit, auch in der Nähe von Diskontinuitäten in der Geschwindigkeitsebene, zu erreichen. Die hierzu stichwortartig zu nennenden Lösungen bilden u.a. bidirektionale Konvergenz, Konvergenzbeschleuniger, asynchrone zyklische Suchstrategie, Block-Erosionsnachverarbeitung. Im Hinblick darauf, daß starke lokale Verzerrungen störender empfunden werden als globale Entartungen, sollte in erster Linie ein möglichst glattes Geschwindigkeitsfeld erzeugt und erst in zweiter Linie, zumindest zu Beginn der Signalverarbeitung, auf Genauigkeit der Bewegungsschätzung Wert gelegt werden. Besonders wichtig sei bereits zu Beginn der Algorithmenentwicklung die Berücksichtigung der sich daraus für die Hardwarerealisierung ergebenden Konsequenzen.

Die für die Bewältigung der Aufgaben bei den erwähnten Methoden der Bewegungsschätzung erforderlichen Gerätschaften müssen in der Regel hohe, aufwendige Anforderungen erfüllen.

### Darstellung der Erfindung

Die Erfindung bietet eine Lösung für das technische Problem, Bewegungsschätzungen mit hoher Genauigkeit bei sehr geringem Aufwand ausführen zu können.

Gemäß der Erfindung ist für ein Verfahren der eingangs erwähnten Art vorgesehen, daß für jeden Block
A) zunächst ein erstes modifiziertes Block-Matching mit folgenden Operationen durchgeführt wird:
   Ai) Zugriff auf mindestens einen bereits vorhandenen Blockvektor zwecks Verwendung als Vektorkandidat;
   Aii) Berechnung des Displaced Block Difference, bezogen auf jeden der gemäß Ai) verwendeten Vektorkandidaten;
   Aiii) Selektion der geringsten, gemäß Aii) berechneten Displaced Block Difference;
   Aiv) Selektion desjenigen Vektor-Kandidaten, für den die geringste Displaced Block Difference gemäß Aiii) gilt, zwecks Verwendung als Startvektor, mit dem nunmehr
B) an mehreren Pixelpositionen eine Pixelrekursion innerhalb des aktuellen Blocks zwecks Bestimmung aktualisierter Bewegungsvektoren, beginnend mit dem gemäß Aiv) selektierten Startvektor, mit folgenden Operationen ausgeführt wird:
   Bi) separate Berechnung horizontaler und vertikaler Helligkeitsgradienten und Bildung ihrer Kehrwerte;
   Bii) Berechnung der Displaced Pixel Difference, bezogen zunächst auf je den gemäß Aiv) selektierten Startvektor und sodann auf den jeweiligen, im vorangegangenen Rekursionsschritt ermittelten aktualisierten Bewegungsvektor;
   Biii) jeweils separate Bestimmung horizontaler und vertikaler Updateterme durch Multiplikation der gemäß Bi) gewonnenen reziproken Gradientenwerte mit der zugehörigen gemäß Bii) berechneten Displaced Pixel Difference und Addition dieser Updateterme zu den horizontalen und vertikalen Komponenten zunächst des Startvektors bzw. der sodann im jeweils vorangegangenen Rekursionsschritt ermittelten aktualisierten Bewegungsvektoren;
   Biv) Selektion desjenigen Bewegungsvektors, für den die geringste Displaced Pixel Difference gemäß Biii) gilt, zwecks Verwendung als weiterer Vektorkandidat, mit dem sodann
C) ein die Ergebnisse des ersten Block-Matching gemäß A) und der Pixelrekursion gemäß B) zusammenfassendes zweites Block-Matching mit folgenden Operationen stattfindet:
   Ci) Berechnung der Displaced Block Difference bezogen auf den gemäß Biv) selektierten weiteren Vektorkandidaten in gleicher Weise wie Aii);
   Cii) Selektion der geringsten, gemäß Aiii) bereits selektierten sowie der gemäß Ci) berechneten Displaced Block Difference;
   Ciii) Selektion desjenigen Vektorkandidaten, der entweder aus dem ersten Block-Matching gemäß A) oder aus der Pixelrekursion gemäß B) gewonnen worden ist und für den die geringste, gemäß Cii) selektierte Displaced Block Difference gilt, als endgültiger Blockvektor
   und daß schließlich:
D) der gemäß Ciii) als endgültig für einen aktuellen Block bestimmte Blockvektor
   Di) für eine nachfolgende Generierung eines dichten Bewegungsvektorfeldes
   Dii) wie auch als neuer, für einen Zugriff gemäß Ai) zwischenzuspeichernder Vektorkandidat
ausgegeben wird.

Diese hybride Lösung für die Bestimmung des endgültigen Blockvektors für jeden Block in mehreren Stufen beschränkt sich in den einzelnen Stufen auf einfach und übersichtlich durchzuführende Maßnahmen für wenige Vektorkandidaten, indem schon bei ihrer Vorauswahl bereits vorhandene qualifizierte Ergebnisse als Eingangsgrößen verwendet werden und die jeweils entstehenden Zwischenresultate einer Prüfung mit hohen Qualitätsanforderungen unterliegen. Dort, wo starke Abhängigkeiten zwischen verwendeten Eingangsgrößen und entstehenden Zwischenresultaten existieren und zur Qualitätssteigerung der Bewegungsschätzung wesentlich beitragen, werden diese Abhängigkeiten ausgenutzt. An anderen Stellen, die weniger genaue Zwischenergebnisse liefern, wird ein sonst zu erwartender Qualitätsverlust durch die vorher genannten Maßnahmen kompensiert. Damit wird eine zuverlässige Schätzung z.B. auch von großen Bewegungen und schnelle Konvergenz bei Bewegungssprüngen erreicht.

Besonders vorteilhafte Ausführungsformen der Erfindung sind Gegenstand von Unteransprüchen und werden weiter unten im Zusammenhang mit den Erläuterungen zu den Figuren noch näher behandelt. Dessen ungeachtet ist jedoch jetzt schon auf solche Ausführungsformen hinzuweisen, denen eine eigene erfinderische Bedeutung beizumessen ist.

Das an sich nur robuste Bewegungsschätzungen liefernde Block-Matching verwendet bei Ausführungsformen der Erfindung z.B. für Halbbildsysteme eine mäanderförmige Abtastung von Blockzeilen sowie eine Kombination der Schätzkriterien aus Halbbildern entgegengesetzter Parität, so daß Fehlschätzungen bei periodischen Strukturen sowie aliasbedigte Fehlschätzungen bei hohen Vertikalfrequenzen verringert werden können. Zur Lokalisierung desjenigen Vektorkandidaten, der dem vorausgegangenen Halbbild entstammt, kommen sowohl diejenige Blockposition in Betracht, die der aktuellen Blockposition entspricht, als auch in besonders vorteilhafter Weise die, welche vertikal und horizontal gegenüber dem aktuellen Block nach Größe und Richtung in der Position so versetzt ist, wie es dieser Vektorkandidat vorgibt. Sollte an dieser Position kein Vektorkandidat aus dem vorangegangenen Halbbild in den aktuellen Block weisen, bedeutet dies praktisch, daß kein zeitlicher Vorgänger für den betreffenden aktuell in der ersten Block-Matchingstufe abzuarbeitenden Block zu berücksichtigen ist.

Die Verwendung von Musterfenstern, die ein größeres Areal als ein Block mit M x N Pixeln erfassen, kann ohne spürbare nachteilige Folgen bei Ausführungsformen der Erfindung mit einer durch Unterabtastung vorzugebenden, im Musterfenster zu analysierenden Pixelpositionen verbunden werden. Dadurch läßt sich der Aufwand wieder auf den Umfang zurückführen, der auch ohne Verwendung derart vergrößerter Areale erforderlich ist. Die Musterfenster überragen einen Block vorzugsweise nur in horizontaler Richtung. Vergrößerungen der Areale von Musterfenstern gegenüber einem Block der Größe M x N auch oder nur in vertikaler Richtung, sind ebenfalls möglich. Zu allen Fällen sollten jedoch die Flächenmittelpunkte des Musterfensters und des Blocks am selben Ort liegen.

Die Pixelrekursion mit ihren wesentlichen Operationen, die für die hybriden Ausführungsformen der Erfindung vorgesehen sind, haben im Hinblick auf die damit auch für reine Pixelrekursionen verbundenen Vereinfachungen weitreichende Bedeutung. Infolge der separaten horizontalen und vertikalen Gradientenberechnung und der ebenfalls für beide Komponenten separaten Schwellwertprüfung läßt sich die Update-Bestimmung mit geringem Aufwand realisieren. Es werden die Kehrwerte der Gradienten oder der Wert Null ausgegeben und die Update-Werte für die horizontalen und vertikalen Bewegungsvektorkomponenten berechnet sowie Pixelvektoren in horizontaler und vertikaler Richtung ausgegeben. Dadurch entfallen z.B. die Berechnung einer quadratischen Gradientenvektornorm und zwei Multiplikationsoperationen. Darüberhinaus erlaubt die Kehrwertbildung die Anwendung einer Tabellenoperation, in die zudem der Schwellwertvergleich einbezogen werden kann.

Der Schwellwertvergleich bei pixelrekursiver Bewegungsschätzung bzw. einer solchen Stufe der hybriden Bewegungsschätzung unterdrückt Rauscheinflüsse, weil keine Aktualisierung des Bewegungsvektors mehr erfolgt, wenn in einer bestimmten Ortsrichtung kein relevanter Helligkeitsgradient festzustellen ist. Weitere Einzelheiten werden in diesem Zusammenhang anhand der nachfolgend in den Zeichnungen dargestellten Ausführungsformen behandelt.

### Kurzbeschreibung der Zeichnungen

Die Zeichnungen vermitteln schematisch die Funktionsweise der Erfindung.

Es zeigen:
- Fig. 1:: ein Blockschaltbild des Gesamtsystems für einen hybriden Bewegungsschätzer;
- Fig. 2:: ein Blockschaltbild der Stufe für das Block-Matching;
- Fig. 3:: ein Blockschaltbild der Stufe für die Pixelrekursion;
- Fig. 4 und 5:: Schaubilder, die eine Vorschrift für den Zugriff auf Vektorkandidaten verdeutlichen;
- Fig. 6:: ein Schaubild, das eine Vorschrift zur Abtastung bei der DBD-Berechnung verdeutlicht;
- Fig. 7:: ein Schaubild für das Updating bei Pixelrekursion innerhalb eines Blocks;
- Fig. 8 und 9:: Schaubilder für die gegenseitige Lagezuordnung von Stützstellen für eine Medianinterpolation zur Generierung eines dichten Blockvektorfeldes.

### Bevorzugte Ausführungen der Erfindung

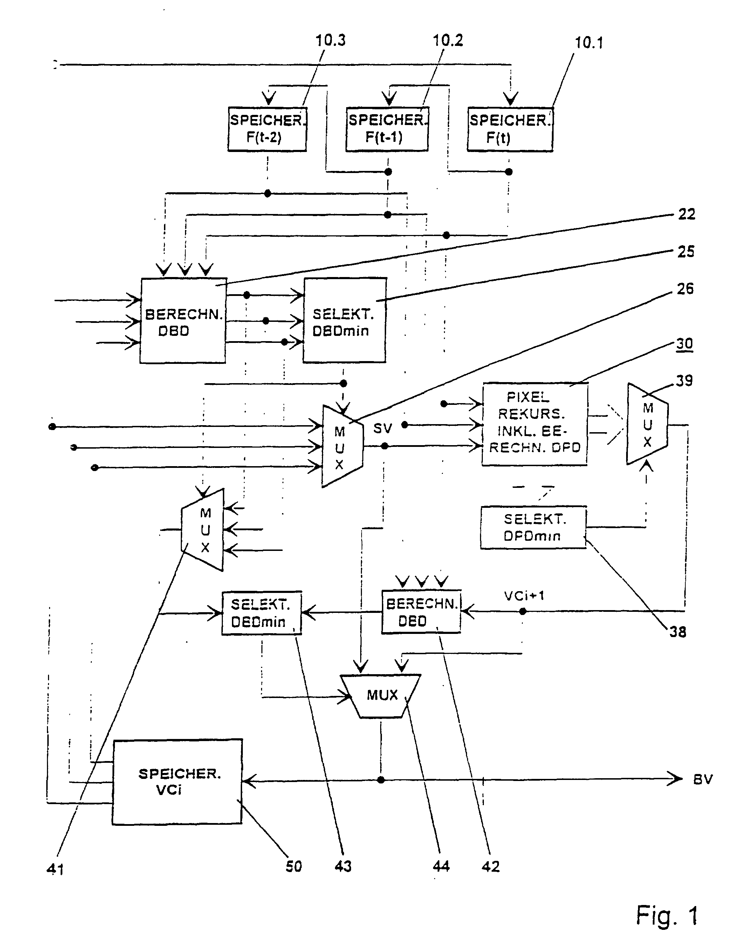

Die Fig. 1 zeigt ein Blockschaltbild für einen hybriden Bewegungsschätzer gemäß der Erfindung und soll zunächst einen generellen Überblick zur Funktionsweise und einem Aufbau einer Rechenanordnung vermitteln.

Die für die Rekursionen benötigten digitalen Daten der Bilder (Halbbild = field; Vollbild = frame) des aktuellen Zeitintervalls **t** und dessen zeitlichen Vorgängern, d.h. der Zeitintervalle **t-1** und **t-2**, werden in Zwischenspeichern **10.1, 10.2** und **10.3** abgelegt. Die Bilder werden in Blöcken zu je M x N Pixeln (pel) organisiert abgearbeitet.

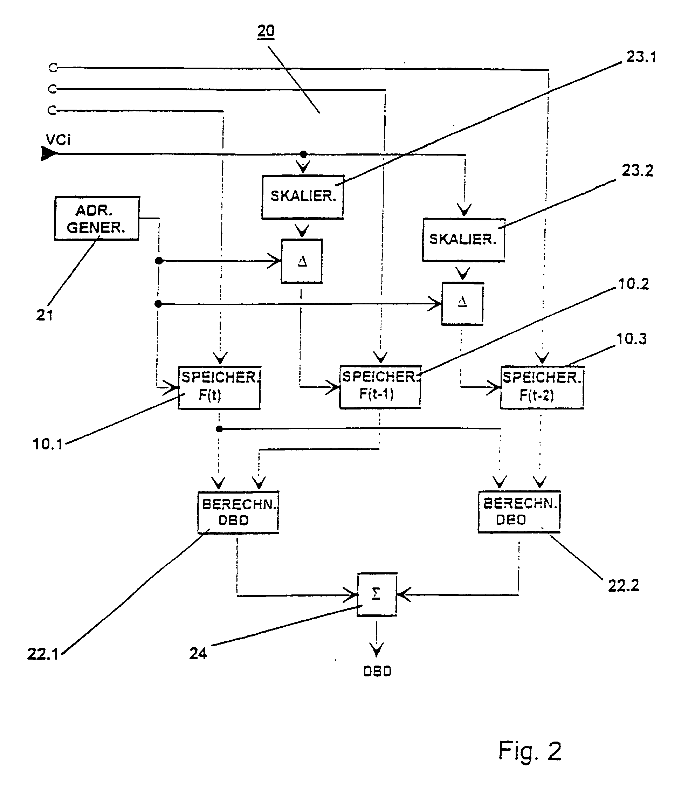

In einer ersten Stufe findet ein rekursives Block-Matching statt. Hierfür dient eine Rechenstufe **20** (vgl. auch Fig. 2). Bei diesem Block-Matching werden in einem Zwischenspeicher **50** als Vektorkandidaten **VCi** abgelegte, bereits vorhandene Blockvektoren **BV** dazu verwendet, aus den Abweichungen der Luminanzen die Werte für die "Displaced Block Difference-DBD" zu berechnen. Einzelheiten hierzu werden weiter unten in der Beschreibung der Fig. 2 noch näher erläutert. Das Ergebnis dieses Block-Matching bildet ein als Startvektor **SV** selektierter Vektorkandidat **VCi,** und zwar derjenige, der die geringste DBD aufweist und deshalb für die in einer zweiten Stufe durchzuführende Pixelrekursion ausgewählt wird.

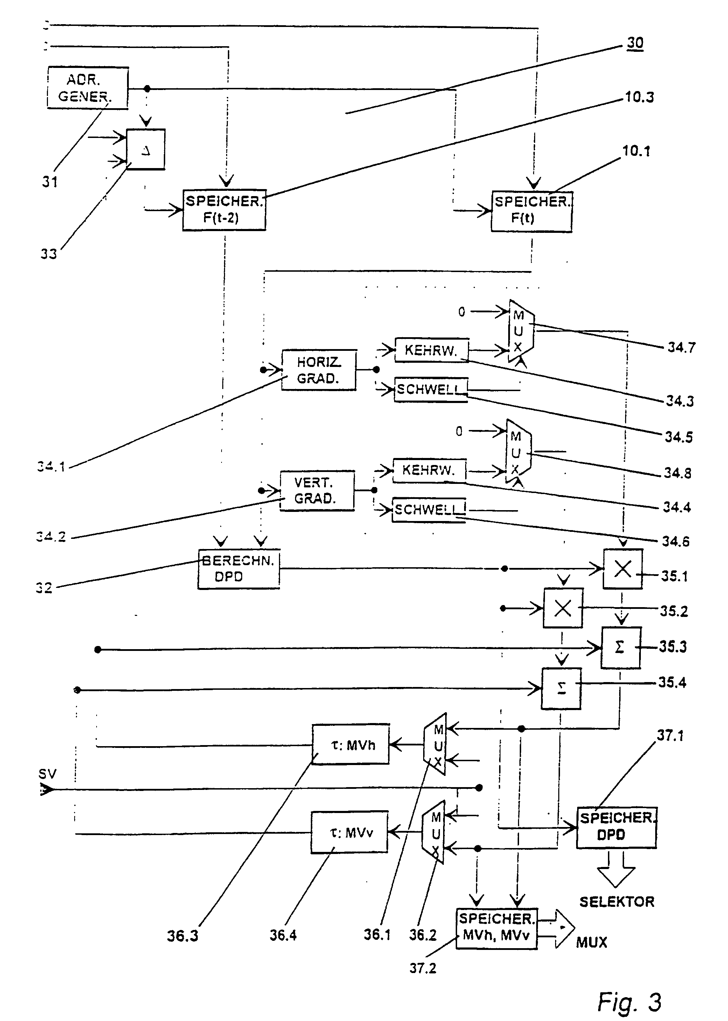

Einzelheiten der für die Pixelrekursion dienenden Rechenstufe **30** werden ebenfalls weiter unten in der Beschreibung der Fig. 3 behandelt. Generell handelt es sich bei der Pixelrekursion darum, den aus dem Block-Matching hervorgegangenen selektierten Startvektor **SV** zu optimieren. Dazu ist für einzelne bestimmte Pixelpositionen jeweils ein Bewegungsvektor **MV** aus bereits vorhandenen Bewegungsvektoren **MV** benachbarter Bildpunkte und ein jeweils zugehöriger Updatevektor zu ermitteln. Hierbei wird explizit die starke örtliche Abhängigkeit benachbarter Positionen im Bewegungsvektorfeld ausgenutzt. Das Ergebnis dieser Pixelrekursion in der Rechenstufe **30** besteht für jeden dieser Operation unterworfenen Bildpunkt in zwei Pixelvektoren **PV,** dem horizontalen Pixelvektor **PVh** und dem vertikalen Pixelvektor **PVv,** und einem Wert für die zugehörige, aktuell berechnete "Displaced Pixel Difference-DPD", für deren Bestimmung die zugehörigen Daten aus den Zwischenspeichern **10.0** und **10.2** heranzuziehen sind. Das Ergebnis der Pixelrekursion bildet ein weiterer Vektorkandidat **VCi+1.** Hierbei handelt es sich um denjenigen Bewegungsvektor **MV,** der die geringste DPD aufweist.

In einer dritten Stufe findet schließlich die Entscheidung statt, ob der Startvektor **SV**, der aus dem Block-Matching gewonnen worden war, durch die Pixelrekursion optimiert werden konnte oder nicht. Das Entscheidungskriterium ist - wie nach dem Block-Matching - die geringste DBD, die für den weiteren Vektorkandidaten **VCi+1** wie für die anderen Vektorkandidaten **VCi** berechnet werden. Der bessere der beiden selektierten Vektoren, entweder der Startvektor **SV** und/oder der Bewegungsvektor **MV,** wird als endgültiger Blockvektor **BV** für den aktuellen Block deklariert und zum Hauptzweck - einer Interpolation eines dichten, pixelgenauen Bewegungsvektorfeldes - ausgegeben und gleichzeitig in den bereits anfangs erwähnten Zwischenspeicher **50** eingeschrieben.

Für die DBD-Berechnungen gelten die gleichen Randbedingungen, ihre Arbeitsphasen überlappen sich jedoch nicht. Die durchzuführenden Operationen können somit von einem einzigen, gemeinsam genutzten Rechenteil übernommen werden.

Die in den Zwischenspeicher **50** eingeschriebenen Blockvektoren **BV** verbleiben dort als Vektorkandidaten **VCi** im wesentlichen für die Dauer der beiden nächsten Zeitintervalle. Danach werden sie nicht mehr benötigt und können nach Art eines Schieberegisters jeweils von ihrem Nachfolger überschrieben werden.

Das in Fig. 2 dargestellte Blockschaltbild für die Rechenstufe **20** zum Block-Matching ist für einen Bewegungsschätzer zur Formatkonversion aus Interlace-Videosignalen konzipiert. Hierzu sind also die digitalen Daten von Halbbildern (fields) in den Zwischenspeichern **10.0, 10.1** und **10.2** bereitzuhalten. Die auszuarbeitenden Blöcke haben hier z.B. die Größe von 4 x 4 Pixeln.

In diesem Zusammenhang ist auf die weiter oben bereits erwähnte, besonders vorteilhafte Maßnahme hinzuweisen, daß im Hinblick auf die Erzielung einer schnellen Konvergenz an vertikalen Objektgrenzen eine mäanderförmige Abarbeitung der Blöcke besonders vorteilhaft ist, d.h. von Blockzeile zu Blockzeile fortschreitend ist jeweils die Richtung für die Abarbeitung umzukehren. Die Rechenstufe **20** enthält zur Steuerung der Abarbeitung im Block-Matching einen Adressengenerator **21**. Dieser sorgt dafür, daß auf die für die aktuell durchzuführenden Operationen benötigten Daten aus den Zwischenspeichern **10.0, 10.1, 10.2** und **50** zugegriffen wird.

In Rechenteilen **22.1** und **22.2** finden die DBD-Berechnungen statt. Dazu werden für mehrere, im behandelten Beispiel zwei Vektorkandidaten **VCi,** die für Blöcke z.B. mit derselben Position wie der aktuelle Block, jedoch in den vorangegangenen Zeitintervallen **t-1** und **t-2** bestimmt worden waren, aus dem Zwischenspeicher **50** entnommen. Jeder dieser Startvektoren **SV** ist, entsprechend seinem zeitlichen Abstand vom aktuell abzuarbeitenden Block, in einem Skalierer **23.1** bzw. **23.2** zu normieren und wird von den DBD-Rechenteilen **22.1** bzw. **22.2** verarbeitet. Je nach Größe und Richtung der normierten Startvektoren **SV** werden für die durchzuführenden DBD-Berechnungen die Daten von zwei Referenzen aus den Zwischenspeichern **10.1** bzw. **10.2** mit denen für das aktuelle Bild aus dem Zwischenspeicher **10.1** ausgewertet. Die somit von den Rechenteilen **22.1** und **22.2** bereitgestellten Ergebnisse werden einem Addierer 24 zugeführt und stellen die jeweilige Displaced Block Difference **DBD** dar.

Aus den einzelnen, derart mit rekursivem Block-Matching berechneten DBD-Werten wird - wie in Fig. 1 gezeigt - in einem Selektor **25** der geringste DBD-Wert - DBD min - ermittelt. Von einem Multiplexer **26,** gesteuert vom nunmehr vorliegenden Wert DBD min- wird derjenige Vektorkandidat **VCi** als Startvektor **SV** selektiert, für den dieser DBD min-Wert gilt.

Für die Pixelrekursion gemäß Fig. 3 werden Daten aus dem aktuellen Zeitintervall **t** - Zwischenspeicher **10.1 -** und dem Zeitintervall **t-2** -Zwischenspeicher **10.3 -** benötigt. Von einem Adressengenerator **31** werden diese Daten, bezüglich des Zeitintervalls **t-2** mittels eines Skalierers **33** normiert - einem Rechenteil **32** für die Berechnung der "Displaced Pixel Difference - DPD" und gleichzeitig die des aktuellen Blocks aus dem Zwischenspeicher **10.1** einer separaten Berechnung der horizontalen und vertikalen Helligkeitsgradienten in Rechenteilen **34.1, 34.2** zugeführt. Ebenfalls separat für die horizontalen und die vertikalen Gradienten werden deren Kehrwerte in Schalungen **34.3** bzw. **34.4** gebildet und gleichzeitig einer Schwellwertprüfung in Schwellwertschaltern **34.5** bzw. **34.6** unterzogen. Werden vorgegebene Schwellwerte nicht überschritten, geben Multiplexer **34.7** bzw. **34.8** eine Null aus, im anderen Fall den betreffenden Kehrwert der ermittelten horizontalen bzw. vertikalen Gradienten. Diese Zwischenergebnisse werden mit dem zugehörigen, vom Rechenteil **32** berechneten DPD-Wert multipliziert - Multiplizierer **35.1** bzw. **35.2** - und zu den Komponenten des Startvektors **SV** bzw. in nachfolgenden Rekursionsschritten der betreffenden aktualisierten, d.h. die Update-Werte enthaltenden Startvektoren - nachfolgend mit "Bewegungsvektor - MV" bezeichnet - addiert. Von den hierzu dienenden Summenbildnern **35.3** bzw. **35.4** gelangen diese Ergebnisse an Multiplexer **36.1** bzw. **36.2**, denen anfangs ebenfalls die horizontale und vertikale Komponente des Startvektors **SV** zugeführt wird und die für den jeweiligen Rekursionsschritt verzögert-Verzögerungsglieder **36.3** bzw. **36.4 -** die Ausgangsgrößen für die Summenbildner **35.3** bzw. **35.4** sowie den Skalierer **33** liefern. Alle in den Gliedern **34.3** bis **34.8** durchzuführenden Operationen können als Tabellenoperationen ausgeführt werden. Die einzelnen, im Rechenteil **32** ermittelten DPD-Werte werden einem Zwischenspeicher **37.2** zugeführt, die die Schnittstelle zu den in Fig. 1 gezeigten Rechenteilen, einem Selektor **38** und einem Multiplexer **39** bilden. Dort wird als Zwischenergebnis für die dritte Stufe der hybriden Bewegungsschätzung derjenige Bewegungsvektor **MV** mit der geringsten DPD min ausgewählt und als zusätzlicher Vektorkandidat **VCi+1** verwendet.

in der dritten Stufe - vgl. Fig. 1 -, einem einfachen Block-Matching wird - wie in einem Rechenteil **22 -** in einem Rechenteil **42** (oder, der besseren Übersichtlichkeit halber hier nicht dargestellt, als letzter Arbeitsschritt in einem sequentieil betriebenen, als Einzeleinheit dienenden Rechenteil **22**) die Displaced Block Difference für diesen zusatzlichen Vektorkandidaten **VCi+1** berechnet. Von der anderen Seite, dem ersten rekursiven Block-Matching, gelangt vcn den dort berechneten DBD-Werten uber einen Multiplexer **41** derjenige an einen Selektor **43,** der in der ersten Stufe der hybriden Bewegungsschätzung für den aktuellen Block den geringsten Wert DBD min aufwies. an einen Selektor **43.** Dieser Selektor **43** entscheidet für einen Multiplexer **44,** ob - mit dem nunmehr als endgültig geringsten DBD min-Wert als Entscheidungskriterium - der Startvektor **SV** oder der aktualisierte, als zusätzlicher Vektorkandidat **VCi+1** deklarierte Bewegungsvektor **MV** der endgültige Blockvektor **BV** sein soll. Damit ist die Abarbeitung eines Blocks abgeschlossen.

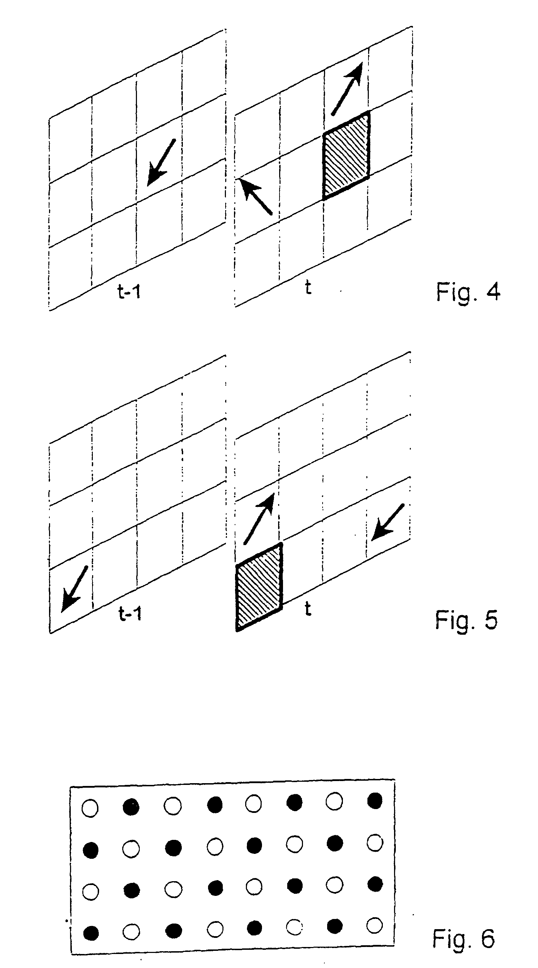

Die Figuren 4 und 5 zeigen ein Beispiel, in welcher Weise für die erste Stufe der hybriden Bewegungsschätzung, das erste rekursive Block-Matching, Vektorkandidaten zusammenzustellen sind. Im oberen und im unteren Teil der Figuren 4 und 5 ist jeweils ein Paar von Bildausschnitten, einem des aktuellen Zeitintervalls und dem anderen seines zeitlichen Vorgängers, dargestellt. Der jeweilige aktuell abzuarbeitende Block ist schraffiert.

Im erwähnten Beispiel werden die Blöcke in Blockzeilen und von oben nach unten fortschreitend in von Blockzeile zu Blockzeile umgekehrter Richtung abgearbeitet. Im linken Teil der Figuren 4 und 5 befindet sich der aktuell abzuarbeitende Block in einer von links nach rechts weisenden Richtung, im rechten Teil der Figuren 4 und 5 - eine Blockzeile tiefer - dementsprechend in einer Blockzeile, die von rechts nach links abgearbeitet wird.

Als zeitlicher Vorgänger dient hier jeweils der Blockvektor, der für den Block im vorausgegangenen Zeitintervall an derselben Position ermittelt worden ist. Der erste örtliche Vorgänger ist der des jeweils über dem aktuellen Block befindlichen Blocks. Der zweite örtliche Vorgänger, jeweils in der Horizontalen. hat einen Abstand von zwei Vektorpositionen links von der aktuellen Blockposition, wenn die betreffende Blockzeile von links nach rechts abgearbeitet wird, und von drei Vektorpositionen rechts von der aktuellen Blockposition bei von rechts nach links in der Blockzeile erfolgender Abarbeitung. Es entsteht also sowohl zeitliche als auch örtliche Rekursion. Die Richtungsumkehr bei der Abarbeitung der Blöcke von Blockzeile zu Blockzeile trägt zur schnelleren Konvergenz an Objektgrenzen bei. da die Kursion wechselweise in das Objekt und aus ihm heraus erfolgt. Die Variation der Abstände in der Horizontalen vermeidet periodisch fortpflanzende Schätzfehler,

Ein weiterer Gesichtspunkt des rekursiven Block-Matching bezieht sich auf die Größe von Musterfenstern, die für durchzuführende Vergleichsoperationen verwendet werden. Bei gegenüber Blöcken mit M x N Pixeln z.B. doppelt großen Musterfenstem mit 2 M x N Pixeln läßt sich der Aufwand durch Unterabtastung der Musterfenster kompensieren. Die Vorschrift für eine sogenannte Quincunx-Abtastung ist aus Fig. 6 zu entnehmen. Dabei werden nur die in der einen Art (z.B. als ausgefüllte Kreisflächen) markierten Punkte analysiert, die anderen nicht. Alle Punkte der einen Art wechseln sich sowohl in der Horizontalen als auch in der Vertikalen mit der anderen Art ab, so daß auf jeden Fall die besonders kritischen horizontalen und vertikalen Bewegungsrichtungen optimal erfaßt werden.

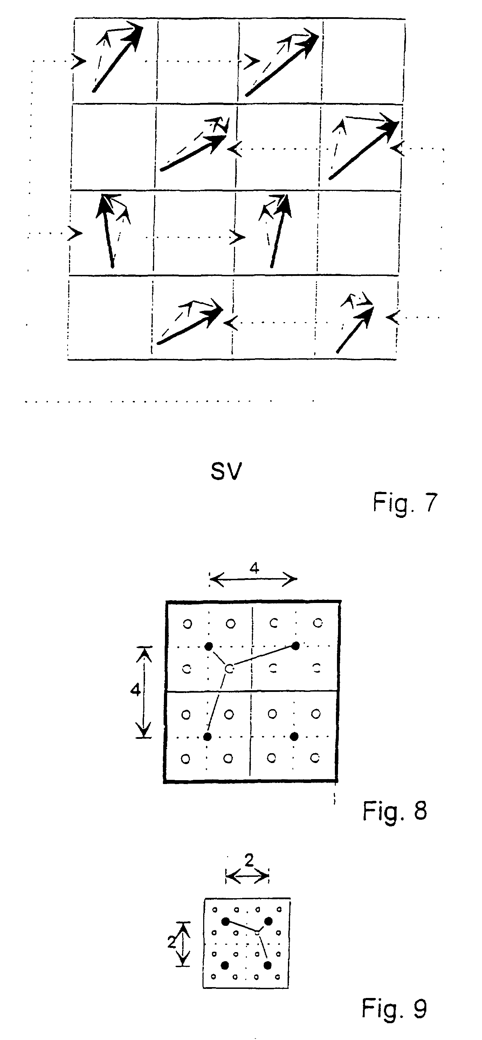

Die aus Fig. 7 zu erkennende Vorgehensweise des Updating bei Pixelrekursion nerhalb eines Blocks mit 4 x 4 Pixeln erstreckt sich für acht Punkte unter zwei Züge. Im ersten Zug wird für den Startvektor (dünner, gestrichelter Pfeil) gleichzeitig am linken Rand des Blocks in der ersten und der dritten Zeile sowie am rechten Rand des Blocks in der zweiten und der vierten Zeile die Aktualisierung vorgenommen. Die Ergebnisse des ersten Zuges sind Bewegungsvektoren (dicke, unterbrochene Pfeile), die sich in der Regel nach Größe und Richtung an jeder der betreffenden vier Pixelpositionen unterscheiden. Die Differenz zwischen Ausgangsgröße - Startvektor - und Ergebnis - Bewegungsvektor - ist der jeweilige Updatevektor (dünner, ununterbrochener Pfeil).

Die Rekursion schreitet im nächsten Zug jeweils um zwei Positionen in der Horizontalen - vom linken Rand = erste Spalte zur dritten Spalte bzw. vom rechten Rand = vierte Spalte zur zweiten Spalte - fort. Hier bilden die Bewegungsvektoren aus dem ersten Zug die Ausgangsgroßen für den zweiten Zug Es werden weitere vier Bewegungsvektoren sowie deren zugehörige Updatevektoren gewonnen.

In der Praxis zeigt sich, daß sich die Updatevektoren der Größe nach wenig unterscheiden. Dementsprechend ist das Risiko gering, bei einer Pixelrekursion mit Quincunx-Unterabtastung unzureichende Ergebnisse zu erhalten.

Die Fig. 8 und & betreffen die abschließende Generierung eines dichten Bewegungsvektorfeldes. Das hybride Schatzverfahren liefert zunächst ein unterabgetastetes Blockvektorfeld mit einem Rasterabstand von z.B. 4 x 4 Bildpunkten horizontal und vertikal. Bei Verwendung einer Medianinterpolation wird ein Vektorwert komponentenweise aus den jeweils drei örtlich nächstgelegenen Blockvektoren erzeugt. Im hier behandelten Beispiel liegt das dichte Vektorfeld dann nach zwei Stufen vor, wobei in der ersten Stufe ein Vektorfeld mit Stützstellenabständen 2 x 2 als Zwischenergebnis vorliegt - siene Fig. 8 -, welches dann zur Erzeugung der Pixelvektoren - siehe Fig. 9 - dient. Die als ausgefüllte Kreisflächen dargestellten Positionen sind die zur Interpolation verwendeten, die als offene Kreisflächen dargestellten sind die interpolierten Vektorpositionen.

## Patentansprüche

1. Verfahren zur Bestimmung von Blockvektoren (BV) für die Bewegungsschätzung in Videobildsequenzen, bei dem Vektorkandidaten (VCi, mit i = 1, 2, ..., n) verwendet und zwischengespeicherte digitale Daten des aktuellen Zeitintervalls (t) und mindestens des unmittelbar vorausgegangenen Zeitintervalls (t-1) in Blöcken zu je M × N Pixeln organisiert abgearbeitet werden,
**dadurch gekennzeichnet,daß**
für jeden Block
A) zunächst ein erstes modifiziertes Block-Matching mit folgenden Operationen durchgeführt wird:
Ai) Zugriff auf mindestens einen bereits vorhandenen Blockvektor (BV) zwecks Verwendung als Vektorkandidat (VCi), mit i = 1, 2,..., n;
Aii) Berechnung der Displaced Block Difference (DBD), bezogen auf jeden der gemäß Ai) verwendeten Vektorkandidaten (VCi);
Aiii) Selektion der geringsten, gemäß Aii) berechneten Displaced Block Difference (DBD min);
Aiv) Selektion desjenigen Vektor-Kandidaten (Vci), für den die geringste Displaced Block Difference (DBD min) gemäß Aiii) gilt, zwecks Verwendung als Startvektor (SV), mit dem nunmehr
B) an mehreren Pixelpositionen eine Pixelrekursion innerhalb des aktuellen Blocks zwecks Bestimmung aktualisierter Bewegungsvektoren (MV), beginnend mit dem gemäß Aiv) selektierten Startvektor (SV), mit folgenden Operationen ausgeführt wird:
Bi) separate Berechnung horizontaler und vertikaler Helligkeitsgradienten und Bildung ihrer Kehrwerte;
Bii) Berechnung der Displaced Pixel Difference (DPD), bezogen zunächst auf jeden gemäß Aiv) selektierten Startvektor (SV) und sodann auf den jeweiligen, im vorangegangenen Rekursionsschritt ermittelten aktualisierten Bewegungsvektor (MV);
Biii) jeweils separate Bestimmung horizontaler und vertikaler Updateterme durch Multiplikation der gemäß Bi) gewonnenen reziproken Gradientenwerte mit der zugehörigen gemäß Bii) berechneten Displaced Pixel Difference (DPD) und Addition dieser Updateterme zu den horizontalen und vertikalen Komponenten zunächst des Startvektors (SV) bzw. der sodann im jeweils vorangegangenen Rekursionsschritt ermittelten aktualisierten Bewegungsvektoren (MV);
Biv) Selektion desjenigen Bewegungsvektors (MV), für den die geringste Displaced Pixel Difference (DPD min) gemäß Biii) gilt, zwecks Verwendung als weiterer Vektorkandidat(VCi+1), mit dem sodann
C) ein die Ergebnisse des ersten Block-Matching gemäß A) und der Pixelrekursion gemäß B) zusammenfassendes zweites Block-Matching mit folgenden Operationen stattfindet:
Ci) Berechnung der Displaced Block Difference (DBD) bezogen auf den gemäß Biv) selektierten weiteren Vektorkandidaten (VCi+1) in gleicher Weise wie Aii);
Cii) Selektion der geringsten, gemäß Aiii) bereits selektierten sowie der gemäß Ci) berechneten Displaced Block Difference (DBD min);
Ciii) Selektion desjenigen Vektorkandidaten (VCi; VCi+1), der entweder aus dem ersten Block-Matching gemäß A) oder aus der Pixelrekursion gemäß B) gewonnen worden ist und für den die geringste, gemäß Cii) selektierte Displaced Block Difference (DBD min) gilt, als endgültiger Blockvektor (BV)
und daß schließlich:
D) der gemäß Ciii) als endgültig für einen aktuellen Block bestimmte Blockvektor (BV)
Di) für eine nachfolgende Generierung eines dichten Bewegungsvektorfeldes
Dii) wie auch als neuer, für einen Zugriff gemäß Ai) zwischenzuspeichernder Vektorkandidat (VCi)
ausgegeben wird.

2. Verfahren nach Anspruch 1,
**dadurch gekennzeichnet, daß**
die Abarbeitung der einzelnen Blöcke des im aktuellen Zeitintervall (t) vorliegenden Bildes von oben nach unten in jeweils von Blockzeile zu Blockzeile umgekehrter Richtung stattfindet.

3. Verfahren nach Anspruch 1 oder 2,
**dadurch gekennzeichnet, daß**
zwecks Verwendung als Vektorkandidat (VCi) gemäß Ai) zugegriffen wird auf:
• den Blockvektor (BV) des Blocks im vorausgegangenen Zeitintervall (t-1) mit derselben Position wie der aktuelle Block;
• den Blockvektor (BV) des Blocks im selben Zeitintervall (t) mit vertikal oberhalb des aktuellen Blocks benachbarter Position;
• den Blockvektor (BV) des Blocks im selben Zeitintervall (t) mit horizontalem Versatz gegenüber dem aktuellen Block
a) um zwei Positionen nach links bei von links nach rechts abgearbeiteten Blockzeilen
und
b) um drei Positionen nach rechts bei von rechts nach links abgearbeiteten Blockzeilen.

4. Verfahren nach Anspruch 1 oder 2,
**dadurch gekennzeichnet,daß**
zwecks Verwendung als Vektorkandidat (VCi) gemäß Ai) zugegriffen wird auf:
• den Blockvektor (BV) des Blocks im vorausgegangenen Zeitintervall (t-1) mit vertikal und horizontal gegenüber dem aktuellen Block nach Größe und Richtung von diesem Vektorkandidaten (VCi) vorgegebener versetzter Position;
• den Blockvektor (BV) des Blocks im selben Zeitintervall (t) mit vertikal oberhalb des aktuellen Blocks benachbarter Position;
• den Blockvektor (BV) des Blocks im selben Zeitintervall (t) mit horizontalem Versatz gegenüber dem aktuellen Block
a) um zwei Positionen nach links bei von links nach rechts abgearbeiteten Blockzeilen
und
b) um drei Positionen nach rechts bei von rechts nach links abgearbeiteten Blockzeilen.

5. Verfahren nach einem der Ansprüche 1 bis 4,
**dadurch gekennzeichnet,daß**
zur Berechnung der Displaced Block Difference (DBD) gemäß Aii) Musterfenster mit doppelter Blockbreite (2 M x N) und am selben Ort liegenden Mittelpunkten von Musterfenster und Block herangezogen werden.

6. Verfahren nach Anspruch 5,
**dadurch gekennzeichnet, daß**
im Musterfenster zu analysierende Pixelpositionen durch Unterabtastung vorgegeben werden.

7. Verfahren nach einem der Ansprüche 1 bis 6,
**dadurch gekennzeichnet, daß**
das erste Block-Matching gemäß A) unter Berücksichtigung zweier Referenzbilder - denen der beiden unmittelbar vorausgegangenen Zeitintervalle (t-1, t-2) - durchgeführt wird.

8. Verfahren nach Anspruch 7,
**dadurch gekennzeichnet,daß**
die gemäß Aii) berechneten Werte für die betreffende Displaced Block Difference (DBD) je nach zeitlichem Abstand zum aktuellen Zeitintervall (t) unterschiedlich gewichtet werden.

9. Verfahren nach einem der Ansprüche 1 bis 7,
**dadurch gekennzeichnet,daß**
die Berechnung horizontaler und vertikaler Updateterme gemäß Biii) in Blöcken, die zu je 4 x 4 Pixeln organisiert sind, an durch Unterabtastung vorgegebenen Pixelpositionen durchgeführt wird.

10. Verfahren nach Anspruch 9,
**dadurch gekennzeichnet, daß**
die Berechnung der Updateterme gemäß Biii) gleichzeitig am linken und am rechten Rand jeweils um einen Zeile versetzt an vier Pixelpositionen beginnt und mit den dabei erzielten Ergebnissen die Berechnung an den übrigen vier horizontal um jeweils zwei Pixelpositionen nach rechts bzw. links versetzten Pixelpositionen erfolgt.

11. Verfahren nach Anspruch 9 oder 10,
**dadurch gekennzeichnet,daß**
nur aktualisierte Bewegungsvektoren (MV) weiter verarbeitet werden, deren Helligkeitsgradienten einen vorgegebenen Schwellwert überschreiten.

12. Verfahren nach Anspruch 11,
**dadurch gekennzeichnet,daß**
die Bildung der reziproken Gradientenwerte gemäß Bi) einschließlich der Schwellwertbildung in einer Tabellenoperation durchgeführt wird.

13. Verfahren nach Anspruch 1 bis 11,
**dadurch gekennzeichnet,daß**
das erste rekursive Block-Matching gemäß A) sowie das zweite Block-Matching gemäß C) sequentiell in einem als Einzeleinheit dienenden Rechenteil durchgeführt werden.

14. Verfahren nach einem der Ansprüche 1 bis 13,
**dadurch gekennzeichnet,daß**
mit den gemäß D1) ausgegebenen Blockvektoren (BV) ein unterabgetastetes Blockvektorfeld bereitgestellt wird, aus dem mittels Medianinterpolation in zwei Stufen das dichte Blockvektorfeld generiert wird.

## Claims

1. Method for determining block vectors (BV) for motion estimation in video image sequences, in which vector candidates (VCi, with i = 1, 2, ..., n) are used, and temporarily stored digital data of the current time interval (t) and at least of the immediately preceding time interval (t-1) are processed while being organised into blocks of MxN pixels each, **characterised in that**
for each block
A) first modified block matching is initially carried out with the following operations:
Ai) accessing at least one pre-existing block vector (BV) for the purpose of use as a vector candidate (VCi), with i = 1, 2, ..., n;
Aii) calculating the displaced block difference (DBD) relating to each of the vector candidates (VCi) used according to Ai);
Aiii) selecting the smallest displaced block difference (DBD min) calculated according to Aii) ;
Aiv) selecting that vector candidate (VCi) for which the smallest displaced block difference (DBD min) applies according to Aiii), for the purpose of use as a start vector (SV), with which
B) a pixel recursion inside the current block is now carried out at a plurality of pixel positions, for the purpose of determining updated motion vectors (MV), beginning with the start vector (SV) selected according to Aiv), with the following operations:
Bi) separately calculating horizontal and vertical brightness gradients and forming their reciprocals;
Bii) calculating the displaced pixel difference (DPD), relating initially to each start vector (SV) selected according to Aiv), and then to the respective updated motion vector (MV) determined in the preceding recursion step;
Biii) respectively separately determining horizontal and vertical update terms by multiplying the reciprocal gradient values obtained according to Bi) with the associated displaced pixel difference (DPD) calculated according to Bii), and adding these update terms to the horizontal and vertical components, initially of the start vector (SV) and of the updated motion vectors (MV) then determined in the respectively preceding recursion step;
Biv) selecting that motion vector (MV) for which the smallest displaced pixel difference (DPD min) according to Biii) applies, for the purpose of use as a further vector candidate (VCi+1), with which then
C) second block matching, which combines the results of the first block matching according to A) and of the pixel recursion according to B), takes place with the following operations:
Ci) calculating the displaced block difference (DBD) relating to the further vector candidate (VCi+1) selected according to Biv) in the same way as Aii) ;
Cii) selecting the smallest displaced block difference (DBD min) already selected according to Aiii) and that calculated according to Ci);
Ciii) selecting that vector candidate (VCi; VCi+1) which was obtained either from the first block matching according to A) or from the pixel recursion according to B) and for which the smallest displaced block difference (DBD min) selected according to Cii) applies, as a final block vector (BV)
and **in that** lastly:
D) the block vector (BV) determined as final for a current block according to Ciii) is output
Di) for subsequently generating a dense motion vector field
Dii) and as a new vector candidate (VCi) to be temporarily stored for access according to Ai).

2. Method according to Claim 1, **characterised in that** the processing of the individual blocks of the image present in the current time interval (t) takes place from the top down in a reverse direction respectively from block row to block row.

3. Method according to Claim 1 or 2, **characterised in that**
the following are accessed for the purpose of use as a vector candidate (VCi) according to Ai):
- the block vector (BV) of the block in the preceding time interval (t-1) with the same position as the current block;
- the block vector (BV) of the block in the same time interval (t) with a neighbouring position vertically above the current block;
- the block vector (BV) of the block in the same time interval (t) with a horizontal offset in relation to the current block
a) by two positions to the left for block rows processed from left to right
and
b) by three positions to the right for block rows processed from right to left.

4. Method according to Claim 1 or 2, **characterised in that**
the following are accessed for the purpose of use as a vector candidate (VCi) according to Ai):
- the block vector (BV) of the block in the preceding time interval (t-1) with a position offset vertically and horizontally in relation to the current block as specified by the magnitude and direction of this vector candidate (VCi) ;
- the block vector (BV) of the block in the same time interval (t) with a neighbouring position vertically above the current block;
- the block vector (BV) of the block in the same time interval (t) with a horizontal offset in relation to the current block
a) by two positions to the left for block rows processed from left to right
and
b) by three positions to the right for block rows processed from right to left.

5. Method according to one of Claims 1 to 4,
**characterised in that**
the pattern windows with twice the block width (2 MxN) and pattern-window and block centres lying at the same place are applied for calculating the displaced block difference (DBD) according to Aii).

6. Method according to Claim 5, **characterised in that** pixel positions to be analysed in the pattern window are defined by subsampling.

7. Method according to one of Claims 1 to 6,
**characterised in that**
the first block matching according to A) is carried out while taking into account two reference images - those of the two immediately preceding time intervals (t-1, t-2).

8. Method according to Claim 7, **characterised in that** values calculated according to Aii) for the relevant displaced block difference (DBD) are each weighted differently according to time separation from the current time interval (t).

9. Method according to one of Claims 1 to 7,
**characterised in that**
the calculation of horizontal and vertical update terms according to Biii) is carried out in blocks, which are each organised as 4x4 pixels, at pixel positions defined by subsampling.

10. Method according to Claim 9, **characterised in that** the calculation of update terms according to Biii) begins simultaneously on the left-hand and right-hand edges respectively offset by one row at four pixel positions, and the calculation at the remaining four pixel positions, horizontally offset respectively by two pixel positions to the right or to the left, takes place with the results thereby obtained.

11. Method according to Claim 9 or 10, **characterised in that**
only updated motion vectors (MV) whose brightness gradients exceed a specified threshold are processed further.

12. Method according to Claim 11, **characterised in that** the formation of the reciprocal gradient values according to Bi), including the threshold formation, is carried out in a table operation.

13. Method according to Claim 1 to 11, **characterised in that**
the first recursive block matching according to A) and the second block matching according to C) are carried out sequentially in a computation part used as a single unit.

14. Method according to one of Claims 1 to 13,
**characterised in that**
a subsampled block vector field, from which the dense block vector field is generated by means of median interpolation in two stages, is prepared with the block vectors (BV) output according to D1).

## Revendications

1. Procédé de détermination de vecteurs blocs (BV) pour l'évaluation du mouvement dans des séquences d'images vidéo, selon lequel on utilise des candidats vecteurs (VCi, i = 1, 2,..., n), et on traite de manière organisée des données numériques enregistrées de façon intermédiaire de l'intervalle de temps actuel (t) et d'au moins l'intervalle de temps directement précédent (t-1) dans des blocs de chaque fois MxN pixels,
**caractérisé en ce que**
pour chaque bloc
Aiv) on effectue tout d'abord une première concordance de blocs, modifiée, avec les opérations suivantes :
Aiv) accès à au moins un vecteur blocs (BV) déjà existant pour l'utiliser comme vecteur candidat (VCi), i = 1, 2,..., n,
Aiv) calcul de la différence de déplacement de blocs (DBD) rapportée à chaque candidat vecteur (VCi) utilisé selon Ai),
Aiv) sélection de la moindre différence de bloc déplacés calculé (DBD min) selon Aii)
Aiv) sélection du candidat vecteur (VCi) pour lequel on a la plus petite différence de blocs décalés (DBD min) selon Aiii), pour l'utiliser comme vecteur de départ (SV) avec lequel maintenant
B) sur plusieurs positions de pixels on exécute une récurrence de pixels à l'intérieur du bloc actuel pour déterminer les vecteurs de mouvement actualisés (MV) en commençant avec le vecteur de départ (SV) sélectionné selon le point Aiv) et en effectuant les opérations suivantes :
Bi) calcul séparé des gradients de luminosité horizontale et verticale et formation des valeurs inverses,
Bii) calcul de la différence de pixels déplacés (DPD) rapporté tout d'abord à chaque vecteur de départ sélectionné (SV) selon Aiv) puis sur le vecteur de mouvement (MV) actualisé, respectif, déterminé dans l'étape de récurrence précédente,
Biii) détermination chaque fois séparément des termes de mise à jour horizontale et verticale par multiplication des valeurs réciproques des gradients obtenus selon Bi), avec la différence de pixels déplacés (DPD) calculée selon Bii), et addition des termes de mise à jour aux composants horizontaux et verticaux tout d'abord du vecteur de départ (SV) ou des vecteurs de mouvement actualisés (MV) obtenus dans l'étape de récurrence chaque fois précédente,
Biv) sélection du vecteur de mouvement (MV) pour lequel on a la plus petite différence de pixels déplacés (DPD min) selon Biii), pour l'utiliser comme autre candidat vecteur (VCi+1)
C) avec ensuite une seconde concordance de blocs regroupant les résultats de la première concordance de blocs selon A) et de la récurrence de pixels selon B), et avec les opérations suivantes :
Ci) calcul de la différence de blocs déplacés (DBD) rapportée à l'autre candidat vecteur (VCi+1) sélectionné selon Biv) de la même manière que Aii),
Cii) sélection de la plus petite différence de blocs déplacés (DBD min), déjà sélectionnée selon Aiii) et calculée selon Ci),
Ciii) sélection du candidat vecteur (VCi, VCi+1) obtenu soit à partir de la première concordance de blocs selon A), soit à partir de la récurrence de pixels selon B), et pour lequel s'applique la plus petite différence de blocs déplacés (DBD min) sélectionnée selon Cii) comme vecteur blocs définitif (BV),
et finalement :
D) on fournit le vecteur blocs (BV) déterminé comme définitif selon Ciii) pour un bloc actuel,
Di) pour générer ensuite un champ de vecteurs de mouvement dense,
Dii) comme candidat vecteur (VCi) nouveau, à enregistrer de façon intermédiaire pour un accès selon Ai).

2. Procédé selon la revendication 1,
**caractérisé en ce que**
le traitement des différents blocs de l'image dans l'intervalle de temps actuel (t) se fait de haut en bas, d'une ligne de blocs à l'autre, en sens inverse.

3. Procédé selon l'une quelconque des revendications 1 ou 2,
**caractérisé en ce que**
pour utiliser comme candidat vecteur (VCi) selon Ai) on prend :
- le vecteur blocs (BV) du bloc de l'intervalle de temps précédent (t-1) avec la même position que le bloc actuel,
- le vecteur bloc (BV) du bloc dans le même intervalle de temps (t) avec la position voisine verticale au-dessus du bloc actuel,
- le vecteur bloc (BV) du bloc dans le même intervalle de temps (t) avec un décalage horizontal par rapport au bloc actuel,
a) avec un décalage de deux positions vers la gauche pour les lignes de blocs traitées de la gauche vers la droite et
b) un décalage de trois positions vers la droite pour les lignes de blocs traitées de la droite vers la gauche.

4. Procédé selon l'une quelconque des revendications 1 ou 2,
**caractérisé en ce que**
pour l'utilisation comme candidat vecteur (VCi) selon Ai) on accède à :
- au vecteur blocs (BV) du bloc dans l'intervalle de temps (t-1) précédent avec une position décalée verticalement et horizontalement par rapport aux blocs actuels selon le module et la direction de ce candidat vecteur (VCi),
- le vecteur blocs (BV) du bloc dans le même intervalle de temps (t) avec une position voisine verticalement au-dessus du bloc actuel,
- le vecteur blocs (BV) du bloc dans le même intervalle de temps (t) avec un décalage horizontal par rapport aux blocs actuels,
a) un décalage de deux positions vers la gauche pour les lignes de blocs traitées de la gauche vers la droite et
b) un décalage de trois positions vers la droit pour les lignes de blocs traitées de la droite vers la gauche.

5. Procédé selon l'une quelconque des revendications 1 à 4,
**caractérisé en ce que**
pour calculer la différence de blocs déplacés (DBD) selon Aii), on utilise une fenêtre modèle avec une double largeur de bloc (2 M x N) et on utilise les centres situés au même emplacement des fenêtres modèles du bloc.

6. Procédé selon la revendication 5,
**caractérisé en ce que**
dans la fenêtre modèle on met en évidence les positions de pixels à analyser en les sous-détectant.

7. Procédé selon l'une quelconque des revendications 1 à 6,
**caractérisé en ce qu'**
on effectue la première concordance de blocs selon A) en tenant compte de deux images de référence (leur intervalle de temps (t-1, t-2) directement précédent).

8. Procédé selon la revendication 7,
**caractérisé en ce qu'**
on pondère différemment les valeurs calculées selon Aii) pour la différence de blocs déplacés (DBD) concernée suivant l'intervalle de temps par rapport à l'intervalle de temps actuel (t).

9. Procédé selon l'une quelconque des revendications 1 à 7,
**caractérisé en ce qu'**
on calcule les termes de mise à jour horizontaux et verticaux selon Biii) dans les blocs organisée chaque fois en 4 x 4 pixels dans des positions de pixels prédéterminées, sous-détectées.

10. Procédé selon la revendication 9,
**caractérisé en ce que**
le calcul des termes de mise à jour selon Biii) se fait simultanément au bord gauche et au bord droit chaque fois avec un décalage d'une ligne en commençant sur quatre positions de pixels et avec les résultats obtenus on calcule les quatre autres positions de pixels, horizontalement décalées chaque fois de deux positions de pixels vers la droite ou vers la gauche.

11. Procédé selon l'une quelconque des revendications 9 ou 10,
**caractérisé en ce qu'**
on continue de traiter seulement les vecteurs de mouvement actualisés (MV) dont les gradients de luminosité dépassent un seuil prédéterminé.

12. Procédé selon la revendication 11,
**caractérisé en ce qu'**
on forme les valeurs de gradients réciproques selon Bi) y compris le seuil dans une opération utilisant des tableaux.

13. Procédé selon l'une quelconque des revendications 1 à 11,
**caractérisé en ce qu'**
on effectue la première concordance de blocs récursive selon A) et la seconde concordance de blocs selon C) séquentiellement dans une partie de calcul servant d'unité séparée.

14. Procédé selon l'une quelconque des revendications 1 à 13,
**caractérisé en ce qu'**
avec les vecteurs de blocs (BV) émis selon D1), on prépare un champ de vecteurs blocs sous-détecté à partir duquel, par interpolation médiane on génère le champ de vecteurs blocs dense par deux étapes. 11
